# EUROPÄISCHE PATENTSCHRIFT

(11) **EP 1 429 118 B1**
(45) Veröffentlichungstag und Bekanntmachung des Hinweises auf die Patenterteilung: **25.02.2009**
(21) Anmeldenummer: 03028330.3
(22) Anmeldetag: 10.12.2003
(51) Int. Cl.: G01C 21/20

(54) **Einrichtung zum Führen von Fahrzeugen**
Arrangement for guiding vehicles
Agencement pour guider des véhicules

(30) Priorität: 13.12.2002 DE 10258657
(43) Veröffentlichungstag der Anmeldung: 16.06.2004
(73) Patentinhaber: Rheinmetall Landsysteme GmbH, 24107 Kiel (DE); Rheinmetall Defence Electronics GmbH, 28309 Bremen (DE)
(72) Erfinder: Ohlf, Bernd, 24116 Kiel (DE); Dangelmeyr, Jürgen, 73084 Salach (DE); Mähr, Harry, 88471 Untersulmetingen (DE); Beaucamp, Felix, 79111 Freiburg (DE); Rüd, Jürgen, 79194 Gundelfingen (DE); Breitung, Andrè, 28307 Bremen (DE); Schmidt, Jochen, 26446 Friedeburg (DE); Murr, Ludwig, 71292 Friolzheim (DE); Rücker, Gerhard, 75217 Birkenfeld (DE)
(74) Vertreter: Dietrich, Barbara

(56) Entgegenhaltungen:
- EP-A- 0 222 518
- EP-A1- 0 567 660
- DE-A1- 3 404 202
- DE-A1- 4 207 251
- DE-A1- 19 548 037
- M.A.RICE: "Communications and Information Systems for Battlefield Command and Control" 1989, BRASSEY'S , UK , XP002434695 * Seite 7; Abbildung 1.3 * * Seite 14 * * Seite 108 *

## Beschreibung

Die Erfindung bezieht sich auf die Funk-, Führungs- und Aufklärungseinrichtungen für ein Fahrzeug beispielsweise der Deutschen Bundeswehr. Diese Einrichtungen werden häufig als C³ (Communication, Command and Control) benannt. Gemeint ist dabei, daß eine militärische Teileinheit jederzeit im Einsatz Verbindung halten (communication), die Führbarkeit mittels Befehlsstruktur (command) gegeben sein und unterstützt werden muß, und daß Aktionen überwacht werden müssen (control).

Ohne Kommunikation gibt es keinerlei Informationsaustausch und geordnete Aktion von mehreren Teileinheiten. Ohne Führungssystem ist eine zielgerichtete und schnelle Aktion von mehreren Einheiten praktisch nicht möglich. Ohne Meldewesen und Lagebeobachtung ist ein effektiver Mitteleinsatz ausgeschlossen. Elektronische Führungssysteme sind in Führungsfahrzeugen, zum Beispiel Gefechtsstandsfahrzeug, Leitstelle, Operationszentrale, des Heeres eine unabdingbare Forderung. Ein Führungssystem muß so konzipiert sein, daß eine optimale Gesamtfunktionalität vorhanden ist und der Bediener im Rahmen seines Einsatzes entlastet wird von Routine und die Führungsaufgaben sicher durchführen kann.

Nach dem Stand der Technik gibt es Applikationssysteme und -software für Führungssysteme, wie zum Beispiel ein Fahrzeugführungssystem von STN Atlas Elektronik in Bremen.

Aus der DE 195 48 037 A1 ist eine Einrichtung zur Führung, Information und Kommunikation von mobilen Einsatzkräften offenbart, die Baugruppen zur Orientierung, Information und Kommunikation sowie einen Rechner aufweist. Hierbei wird, ausgehend von der Praxis, daß alle Komponenten geschützt in einem Gehäuse untergebracht sind, vorgeschlagen, um dem Anwender die Wahl von beliebigen Rechnern unterschiedlicher Hersteller zu ermöglichen, eine bauliche Trennung des Rechners von den übrigen Komponenten der Einrichtung vorzunehmen.

Aus der EP 0 567 660 B2 ist eine gattungsgemäße Einrichtung zum Führen von Fahrzeugen bekannt. Damit führende Personen bei der Führung eines Fahrzeuges oder -verbandes schneller, genauer und übersichtlicher informiert und von der Informationsverarbeitung weitgehend entlastet wird, ist vorgesehen, diese Aufgaben vom Führungsrechner bewältigen zu lassen, womit diesem eine größere Rolle in der Einrichtung zufällt, als bisher vorgesehen. Dazu wird der Rechner mit zusätzlichen Baugruppen ausgerüstet, wie beispielsweise einem Graphikprozessor, einer Videoelektronik etc. Dabei sind Baugruppen zur Orientierung, Information und Kommunikation mit dem graphikfähigen Rechner verbunden. Diese Baugruppen umfassen u. a. eine Funkanlage mit Funkgerät, einen optischen Sensor zur Gewinnung eines Panoramabildes sowie einen vorzugsweise berührungsempfindlichen Bildschirm. Durch diesen können Kartendarstellungen in dem Bildschirm so verschoben werden, dass bisher nicht sichtbare Abschnitte ins Blickfeld der Führungsperson gelangen. Der optische Sensor ist ein optischer Winkelspiegel.

Aus dem Lehrbuch von M.A. Rice und A.J. Sammes, Communications and Informations Systems for Battlefield Command and Control, Brassey's (UK) 1989 (Land Warfare V.5), ISBN 0-08-036266 sind Kryptierte Informations übertragungen in HF-oder VHF-Bereich bekannt,

Die Aufgabe der Erfindung liegt in der Verbesserung eines Führungssystems mit Funk-, Führungs- und Aufklärungskomponenten auf einem militärischen Fahrzeug.

Die Lösung dieser Aufgabe erfolgt erfindungsgemäß dadurch, Funk-, Führungs- und Aufklärungskomponenten zu einem optimalen und ganzheitlich funktionalen Gesamtsystem zusammenzufügen. Dabei ist ein Schwerpunkt, dass vorhandene (alte) Komponenten und eingeführte Teile mit neuen und den neuesten Anforderungen entsprechenden Komponenten zu einem optimal funktionierenden ganzheitlichen System zusammengebracht werden. Erreicht werden soll eine Interoperabilität der Systeme. Unter Interoperabilität wird die Fähigkeit von Systemen verstanden, Informationen auszutauschen und so aufzuarbeiten, dass eine wirksame Zusammenarbeit gewährleistet ist.

Das System besteht aus Komponenten der Sensorik und Aufklärung, Funk- und Verständigungskomponenten, Navigationseinrichtungen und elektronischen Rechnergeräten, die miteinander verschaltet und elektrisch verbunden sind.

In einer bevorzugten Ausführung weist die Einrichtung einen Sensorkopf mit einem Wärmebildgerät, Laserentfernungsmesser und einer CCD-Kamera auf einem Schwenk- und Neigekopf mit einem Hubmast auf.

Das ganzheitliche funktionale Gesamtsystem zeichnet sich durch folgende vorteilhafte Eigenschaften aus:
- Teststellung und Darstellung der Eigenposition und Visierlinienrichtung auf einer elektronischen Karte (Führungssystem);
- Tag- und Nacht-Aufklärung mittels Sensor auf einem Schwenk-/Neigekopf, der mittels Hubmast auf einem Fahrzeug adaptiert ist;
- Entfernungsmessung zu einem Ziel; Darstellung der Entfernungsmessung;
- Positionsbestimmung eines Zieles;
- Zuordnung eines takischen Zeichens (Symbol) zu einem Ziel;
- Übertragung von Aufklärungsdaten mittels Funk (VHF und HF kryptiert) zu einem anderen Fahrzeug und zu einer Leitstelle;
- Sprechfunk mittels VHF und HF;
- Datenfunk mittels VHF und HF (kryptiert);
- Relaisfunktion VHF-Sprechfunk zu HF-Sprechfunk und umgekehrt.

Das Führungssystem zeichnet sich zudem dadurch aus, dass die Anwendungsapplikation (Führungssoftwaresystem) eine implementierte HF-Bediensoftware beinhaltet. Dadurch ist es möglich, das HF-Funkgerät mittels Führungsrechner zu bedienen. Es entfällt dadurch der bei dem HF-Funkgerät sonst erforderliche Funkbetriebsrechner.

Mit der vorliegenden Lösung wird ein kryptierter (verschlüsselter) HF-Datenfunk realisiert, wobei in der Applikationssoftware keine Bediensoftware für das HF-Funkgerät implementiert ist.

Ein Ausführungsbeispiel der Erfindung ist in den Zeichnungen schematisch dargestellt und wird im folgenden Text näher beschrieben.
Es zeigen
- Figur 1:: Blockschaltbild
- Figur 2:: Funkkonzept

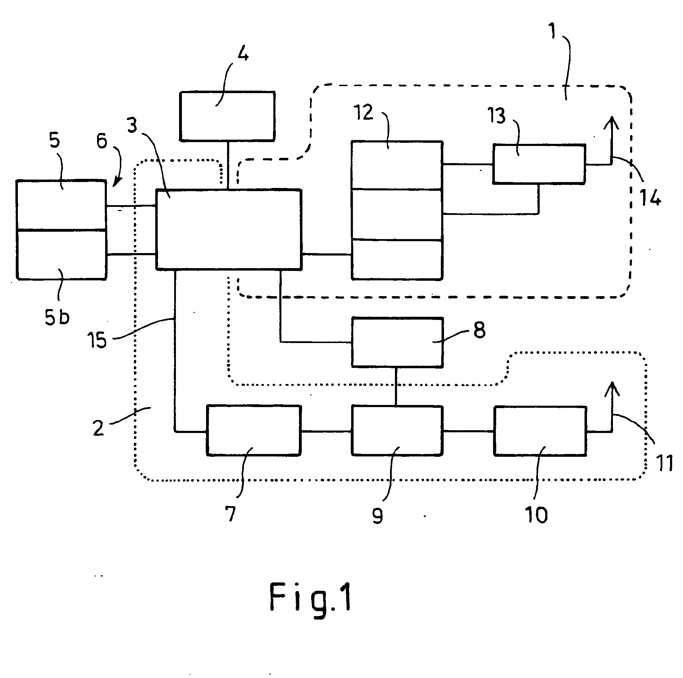

Figur 1 zeigt einen Führungsrechner 3 mit den mittels elektrischen Verbindungen 15 verbundenen, für die Lösung bevorzugten weiteren Komponenten: einer Navigationsanlage 4, einem Wärmebildgerät, Laserentfernungsmesser und einer CCD-Kamera 5 auf einem Schwenk-/Neigekopfsystem mit einem Hubmast 6 adaptierten optronischer Sensor 5b, einem Kryptogerät 7, einer Bordverständigungsanlage 8 und einem VHF-Funkgerät 12. Der Sensor 5b kann dabei ein Lasergerät sein, der Hubmast 6 ist auf einem Fahrzeug 18, 19 angeordnet.

Das Funkgerät 12 ist unter Zwischenschaltung eines Antennenkopplers 13 mit einer Antenne 14 verbunden. Mittels einer Umrandung ist dargestellt, daß die Komponenten 12, 13, 14 und teilweise 3.1 des Führungsrechners 3 zu einem Datenübertragungsweg 1 im VHF- Bereich gehören.
Ein weiteres, ein HF- Funkgerät 9 ist einerseits mit dem Kryptogerät 7 und der Bordverständigungsanlage 8 und andererseits unter Zwischenschaltung eines Antennenanpaßgeräts 10 mit der HF- Antenne 11 verbunden. Eine weitere Umrandung stell dar, daß die übrigen Komponenten und Führungsrechner 3 teilweise 3.2 zu einem Datenübertragungsweg 2 im HF-Bereich gehören.

Der Datenübertragungsweg 1 ist dabei interoperabel mit vorhandenen Fahrzeugen, während neue Systeme häufig mit dem Datenübertragungsweg 2 kompatibel sind.

Die Bordverständigungsanlage 8 ist mit dem Führungsrechner 3 und dem HF- Funkgerät 9 verbunden und dient zur Durchführung des Sprechverkehrs im Fahrzeug 18 zwischen der Besatzung und mit entfernt liegenden Fahrzeugen 19 und Gegenstellen/ Leitstellen 16.

Teile der Vorrichtung, wie Führungsrechner 3 und Kryptogerät 7, sind untereinander mittels Lichtwellenleiter und entsprechenden Modemgeräten für den Datenaustausch verbunden, um so eine Potentialfreiheit zwischen den betreffenden Geräten zu erreichen.

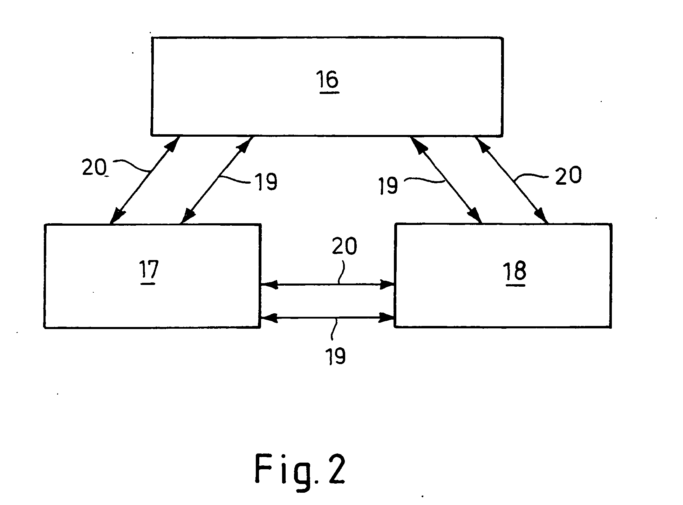

Figur 2 zeigt das Funkkonzept, welches zur Anwendung kommt.
Eine Leitstelle 16 hält Verbindung zu den Fahrzeugen 17 und 18, die auch untereinander Funkverbindung haben. Alle Teilnehmer 16, 17, 18 tauschen einmal die Sprache und Daten mittels nicht kryptierter VHF - Verbindungen 19 und mittels teilweiser kryptischer HF- Verbindungen 20 untereinander aus, wobei bei der HF- Verbindung 20 die Sprache offen und nicht kryptiert, jedoch die Daten verschlüsselt/ kryptiert übertragen werden.

### Legende:

- 1: Datenübertragung im VHF- Bereich
- 2: Datenübertragung im HF- Bereich
- 3: Führungsrechner mit Display und Tatstatur
- 4: Navigationsanlage
- 5: Wärmebildgerät, Laserentfernungsmesser und CCD-Kamera
- 6: Schwenk-/ Neigekopf mit Hubmast
- 7: Kryptogerät (Verschlüsselungsgerät)
- 8: Bordverständigungsanlage
- 9: HF- Funkgerät
- 10: Antennenanpaßgerät
- 11: HF- Antenne
- 12: VHF- Funkgerät mit Grundplatte
- 13: Antennenkoppler
- 14: VHF- Antenne
- 15: Elektrisch leitende Verbindung oder Lichtwellenleiterverbindung
- 16: Gegenstelle oder Leitstelle
- 17: Militärisches Fahrzeug
- 18: Weiteres Fahrzeug
- 19: VHF- Funkverbindung (mit Sprache und Daten offen übertragen)
- 20: HF- Funkverbindung (mit Sprache offen und Daten kryptiert übertragen).

## Patentansprüche

1. Einrichtung zur Führung, Information und Kommunikation von mobilen Einsatzkräften mit Komponenten, nämlich einem graphikfähigen Rechner (3) und Baugruppen zur Orientierung, Information und Kommunikation, aufweisend
- ein Führungssystem zur Eingabe, Verarbeitung und Darstellung von Informationen und ein Aufklärungsteil mit einer zugehörigen elektronischen Erfassung für die Aufklärung, **dadurch gekennzeichnet, dass** sie folgende Merkmale umfaßt:
- eine Funkanlage mit wenigstens zwei Funkgeräten (9, 12) zur Nachrichten- und Datenübermittlung
- das Merkmal, dass ein Teil (3.1) des Rechners (3) mit dem einen Funkgerät (12) einen ersten Datenübertragungsweg (1) im VHF-Bereich bildet und das Funkgerät (12) mittels eines Antennenkopplers (13) mit einer Antenne (14) verbunden ist,
- das Merkmal, dass ein weiterer Teil (3.2) des Rechners (3) mit einem angeschlossenen Kryptogerät (7) und dem damit verbundenen anderen Funkgerät (9) einen weiteren Datenübertragungsweg (2) im HF-Bereich bildet und das Funkgerät (9) mittels einem Antennenanpassgerät (19) mit einer HF-Antenne (11) verbunden ist, und
- das Merkmal, dass die HF-Verbindung (20) so ausgestaltet ist, dass die Sprache offen und die Daten kryptiert übertragen werden.

2. Einrichtung nach Anspruch 1, **dadurch gekennzeichnet, dass** der VHF-Datenübertragungsweg (1) interoperabel zu bekannten Systemen ist.

3. Einrichtung nach Anspruch 1 oder 2, **dadurch gekennzeichnet, dass** der HF- Datenübertragungsweg (2) interoperabel zu neueren Funksystemen ist und den verschlüsselten Datenaustausch mit entsprechend ausgerüsteten Gegenstellen zulässt.

4. Einrichtung nach Anspruch 1, **dadurch gekennzeichnet, dass** sie eine Anzeige des Führungsrechners (3) umfaßt, auf der wenigstens eine elektronischen Landkarte darstellbar ist.

5. Einrichtung nach Anspruch 1, **dadurch gekennzeichnet, dass** die Baugruppe zur Orientierung eine Fahrzeug- Navigationsanlage (4) aufweist, die mit dem Rechner (3) verbunden ist.

6. Einrichtung nach einem der oben genannten Ansprüche 1 bis 5, **dadurch gekennzeichnet, dass** sie ein Wärmebildgerät, einen Laserentfernungsmesser und eine CCD-Kamera (5) für die Nacht- und Tagsicht umfaßt, die auf einer Schwenk-/ und Neigekopfanordnung mit einem Hubmast (6) auf dem Fahrzeug angeordnet sind und dass die Geräte (5) mit dem Führungsrechner (3) datenmäßig und elektrisch verbunden sind.

7. Einrichtung nach Anspruch 6, **dadurch gekennzeichnet, dass** sie einen optronischen Sensor (5b) umfaßt, der ein Lasergerät ist.

8. Einrichtung nach einem der oben genannten Ansprüche 1 bis 7, **dadurch gekennzeichnet, dass** sie eine Bordverständigungsanlage umfaßt, die (8) mit dem Rechner (3) und dem HF-Funkgerät (9) verbunden ist zur Durchführung des Sprechverkehrs im Fahrzeug zwischen der Besatzung und mit entfernt liegenden Fahrzeugen (18, 19) und Gegenstellen/Leitstellen (16).

9. Einrichtung nach einem der oben genannten Ansprüche 1 bis 8, **dadurch gekennzeichnet, dass** sie Lichtwellenleiter und entsprechende Modemgeräte für den Datenaustausch umfaßt, über welche Teile der Vorrichtung, wie der Rechner (3) und das Kryptogerät (7) untereinander verbunden sind.

## Claims

1. Device for guidance, information and communication of and with mobile combat forces having components, specifically a computer (3) with graphics capability and assemblies for orientation, information and communication, having
- a guidance system for inputting, processing and displaying information and a reconnaissance part with associated electronic recording for reconnaissance,
- a radio installation having at least two radios (9, 12) for message and data transmission,
**characterized in that** the device comprises the following features:
- the feature that a part (3.1) of the computer (3) together with one radio (12) forms a first data transmission path (1) in the VHF range and the radio (12) is connected by means of an antenna coupler (13) to an antenna (14),
- the feature that a further part (3.2) of the computer (3) together with a connected cryptographic appliance (7) and the other radio (9) connected thereto forms a further data transmission path (2) in the HF range and the radio (9) is connected by means of an antenna matching appliance (19) to the HF antenna (11), and
- the feature that the HF connection (20) is designed such that speech is transmitted open and data is transmitted encrypted.

2. Device according to Claim 1, **characterized in that** the VHF data transmission path (1) is interoperable with known systems.

3. Device according to Claim 1 or 2, **characterized in that** the HF data transmission path (2) is interoperable with more recent radio systems and allows encrypted data interchange with appropriately equipped remote locations.

4. Device according to Claim 1, **characterized in that** the device comprises a display of the guidance computer (3), on which at least one electronic land map can be displayed.

5. Device according to Claim 1, **characterized in that** the assembly for orientation has a vehicle navigation installation (4) which is connected to the computer (3).

6. Device according to one of the abovementioned Claims 1 to 5, **characterized in that** the device comprises a thermal imager, a laser rangefinder and a CCD camera (5) for night vision and daytime vision, which are arranged on a scanning and fitting head arrangement with a lifting mast (6) on the vehicle, and **in that** the appliances (5) are connected electrically and for data transmission purposes to the guidance computer (3).

7. Device according to Claim 6, **characterized in that** the device comprises an optronic sensor (5b) which is a laser.

8. Device according to one of the abovementioned Claims 1 to 7, **characterized in that** the device comprises an on-board communication installation (8) which is connected to the computer (3) and to the HF radio (9), in order to provide speech traffic in the vehicle between the crew and with vehicles (18, 19) and remote locations/control centres (16) at some distance away.

9. Device according to one of the abovementioned Claims 1 to 8, **characterized in that** the device comprises optical waveguides and corresponding modems for data interchange, via which parts of the apparatus, such as the computer (3) and the cryptographic appliance (7), are connected to one another.

## Revendications

1. Système de guidage, d'information et de communication de forces d'intervention mobiles, qui présente des composants, à savoir un calculateur (3) à capacités graphiques et des modules d'orientation, d'information et de communication qui présentent :
un système de guidage qui permet d'introduire, de traiter et de présenter des informations et une partie de détection dotée d'une saisie électronique associée pour la détection,
**caractérisé en ce qu'**il présente les caractéristiques suivantes :
une installation radio qui présente au moins deux appareils radio (9, 12) pour la transmission de messages et de données,
la caractéristique qu'une partie (3.1) du calculateur (3) forme avec un appareil radio (12) un premier parcours de transmission (1) dans la plage VHF et que l'appareil radio (12) est relié à une antenne (14) au moyen d'un coupleur d'antenne (13),
la caractéristique qu'une autre partie (3.2) du calculateur (3) forme avec un appareil cryptographique (7) qui lui est raccordé et avec l'autre appareil radio (9) qui lui est raccordé un autre parcours (2) de transmission de données dans la plage HF et que l'appareil radio (9) est relié à une antenne (11) au moyen d'un appareil (19) d'adaptation d'antenne et
la caractéristique que la liaison HF (20) est configurée de manière à transmettre la voix de manière ouverte et les données de manière cryptée.

2. Dispositif selon la revendication 1, **caractérisé en ce que** le parcours (1) de transmission de données par VHF est interopérable avec des systèmes connus.

3. Dispositif selon les revendications 1 ou 2, **caractérisé en ce que** le parcours (2) de transmission de données en HF est interopérable avec de nouveaux systèmes radio et permet l'échange crypté de données avec des correspondants équipés de manière appropriée.

4. Dispositif selon la revendication 1, **caractérisé en ce qu'**il comprend un affichage du calculateur de guidage (3) sur lequel au moins une carte topographique électronique peut être présentée.

5. Dispositif selon la revendication 1, **caractérisé en ce que** le module d'orientation présente une installation (4) de navigation pour véhicule reliée au calculateur (3).

6. Dispositif selon l'une des revendication 1 à 5 ci-dessus, **caractérisé en ce qu'**il comporte un appareil d'imagerie thermique, un dispositif de mesure de distance par laser et une caméra CCD (5) pour la vision nocturne et la vision diurne qui sont disposés sur un système à tête pivotante et inclinable dotée d'un mât (6) situé sur le véhicule et **en ce que** les appareils (5) sont reliés électriquement et en termes de données au calculateur de guidage (3).

7. Dispositif selon la revendication 6, **caractérisé en ce qu'**il comprend un détecteur optoélectronique (5b) qui est un appareil laser.

8. Dispositif selon l'une des revendications 1 à 7 qui précèdent, **caractérisé en ce qu'**il comprend une installation (8) de communication embarquée qui est reliée au calculateur (3) et à l'appareil radio HF (9) pour permettre le trafic vocal entre les occupants du véhicule et avec les véhicules (18, 19) situés à distance ainsi qu'avec des correspondants et/ou emplacements de guidage (16).

9. Dispositif selon l'une des revendications 1 à 8 qui précèdent, **caractérisé en ce qu'**il comprend des conducteurs d'ondes lumineuses et des appareils modem qui permettent l'échange de données et par lesquels des parties du dispositif, par exemple le calculateur (3) d'appareil cryptographique (7), sont reliées mutuellement.
